Europäisches Patentamt

European Patent Office

Office européen des brevets

(11) Veröffentlichungsnummer: **0 473 183 A1**

# EUROPÄISCHE PATENTANMELDUNG

(21) Anmeldenummer: **91114614.0**

(22) Anmeldetag: **30.08.91**

(51) Int. Cl.5: **F15B 13/01**, F15B 13/02

(30) Priorität: **31.08.90 DE 4027590**

(43) Veröffentlichungstag der Anmeldung:
**04.03.92 Patentblatt 92/10**

(84) Benannte Vertragsstaaten:
**DE ES FR GB**

(71) Anmelder: **ECKER MASCHINENBAU GMBH & CO. KG**
**Gessbachstrasse 2**
**W-6680 Neunkirchen(DE)**

(72) Erfinder: **Ecker, Felix**
**Am Köppchen 1,**
**W-6683 Spiesen-Elversberg(DE)**
Erfinder: **Mateja, Ernst**
**Lutherstrasse 7**
**W-6680 Neunkirchen(DE)**
Erfinder: **Alles, Roman**
**Piesbacher Strasse 61**
**W-6645 Beckingen(DE)**

(74) Vertreter: **Bernhardt, Winfrid, Dr.-Ing.**
**Kobenhüttenweg 43**
**W-6600 Saarbrücken(DE)**

(54) Hydraulisches Ventil.

(57) Ein hydraulisches Ventil (4) weist einen Ventilkolben (14) auf, der an einem Dichtsitz (31) einen Durchgang von einem Pumpenanschluß (P) zu einem Verbraucheranschluß (A) in Schließstellung sperrt und in Öffnungsstellung frei läßt und dessen an der einen Stirnseite vor dem Dichtsitz (31) in Öffnungsrichtung wirksamer Kolbenfläche an der anderen Stirnseite eine Schließkraft erzeugende Kolbenfläche (37) entgegengerichtet ist, deren Druckraum (40) mit dem Druckraum (44) vor der ersteren Kolbenfläche über eine Drossel (42) verbunden ist und zum Öffnen des Ventils (4) durch ein Steuerventil (5) zu öffnen ist.
Das Steuerventil (5) ist in einer mit einem Rücklaufanschluß (R) verbindenden Leitung (43,35,36) angeordnet.
Der Ventilkolben (14) läßt an einem weiteren Dichtsitz (9) einen Durchgang von dem Verbraucheranschluß (A) zu dem Rücklaufanschluß (R) in der genannten Schließstellung frei und sperrt ihn in der genannten Öffnungsstellung.

Fig.1

Die Erfindung betrifft ein hydraulisches Ventil mit einem Ventilgehäuse und einem Ventilkolben, der an einem Dichtsitz einen Durchgang von einem Pumpenanschluß zu einem Verbraucheranschluß in Schließstellung sperrt und in Öffnungsstellung frei läßt und dessen an der einen Stirnseite vor dem Dichtsitz in Öffnungsrichtung wirksamer Kolbenfläche an der anderen Stirnseite eine Schließkraft erzeugende Kolbenfläche entgegengerichtet ist, deren Druckraum mit dem Druckraum vor der ersteren Kolbenfläche über eine Drossel verbunden ist und zum Öffnen des Ventils durch ein Steuerventil zu öffnen ist.

Ein solches Ventil ist aus der EU-OS 0 241 880 bekannt. Die Schrift befaßt sich mit dem Problem, daß Leckflüssigkeit in die Verbraucherleitung gelangt und den Verbraucher kriechen läßt. Sie schlägt eine verhältnismäßig komplizierte Lösung vor.

Der Erfindung liegt die Aufgabe zugrunde, das Kriechen mit einfacheren Mitteln auszuschließen.

Gemäß der Erfindung wird dieser Zweck bei einem Ventil der eingangs bezeichneten Art dadurch erfüllt, daß das Steuerventil in einer mit einem Rücklaufanschluß verbundenen Leitung angeordnet ist.

Dieser Lösung steht zwar der zwangsläufig mit ihr verbundene Nachteil entgegen, daß während der Betätigung des Steuerventils ständig Druckflüssigkeit in den Rücklauf strömt. Dieser Nachteil läßt sich aber, wie mit der Erfindung erkannt wurde, bei geeigneter Bemessung der erwähnten Drossel ohne weiteres in Kauf nehmen. Die Betätigungszeiten des Ventils sind in aller Regel verschwindend gering im Vergleich zu den Ruhezeiten. In diesen geht nur die Leckflüssigkeit, soweit sie bei der betreffenden Ventilkonstruktion überhaupt auftritt, in den Rücklauf.

Besonders vorteilhaft ist die vorgeschlagene Lösung aber in Kombination mit der weiteren Ausbildung des Ventils, daß der Ventilkolben an einem weiteren Dichtsitz einen Durchgang von dem Verbraucheranschluß zu dem Rücklaufanschluß in der genannten Schließstellung frei läßt und in der genannten Öffnungsstellung sperrt. Hier ist ohnehin Rücklauf durch das Ventil vorgesehen.

Das eigentlich mögliche Ausmaß einer vorteilhaften Gesamtkonstruktion wird jedoch erreicht in der Ausgestaltung des Ventils als ein Schieberventil. Der erstgenannte Dichtsitz soll dann einen in einer Nut des Gehäuses angeordneten, in der Schließstellung den Kolben auf einem zylindrischen Abschnitt dicht umschließenden Dichtring aufweisen, und der Kolben soll einen an seinem Umfang umlaufenden Spalt aufweisen, der durch Längsbohrungen nach der erstgenannten Stirnseite des Kolbens verbunden ist und in der Schließstellung vor und in der Öffnungsstellung hinter dem Dichtring liegt, wo er nach einem Ringraum des Ventilgehäuses ausmündet, der mit dem Verbraucheranschluß verbunden ist. Der genannte weitere Dichtsitz kann einen hinter dem genannten Ringraum angeordneten zylindrischen Abschnitt der Ventilgehäusewand aufweisen, an dem in der genannten Öffnungsstellung ein in einer Nut des Kolbens angeordneter Dichtring dicht anliegt und an dem in der genannten Schließstellung eine Einschnürung des Kolbens von dem genannten Ringraum aus vorbeiführt nach einem weiteren Ringraum des Ventilgehäuses, der mit dem Rücklaufanschluß verbunden ist.

Das so gebaute Ventil hat im Vergleich mit allen bekannten, in gleicher Funktion eingesetzten Ventilen ein außerordentlich günstiges Verhältnis zwischen Durchlaßquerschnitt und Bauvolumen.

Weitere vorteilhafte Ausgestaltungen im einzelnen sind in der folgenden Beschreibung eines Ausführungsbeispiels der Erfindung angeführt.

Die Zeichnungen geben das Ausführungsbeispiel wieder:

Fig. 1    zeigt einen axialen Schnitt durch ein hydraulisches Ventil,

Fig. 2    zeigt einen Schnitt nach Linie II-II in Fig. 1 und

Fig. 3 bis 10    zeigen Schaltbilder.

In einem Klotz 1 sind zwei Ausnehmungen 2 und 3 gebohrt bzw. gefräst, in denen ein Ventil 4 und ein Steuerventil 5 eingerichtet sind.

Der Klotz 1 ist bestimmt, durch Platten-Anschlüsse 6 mit Zu- und Ableitungen verbunden zu werden, die in einer Platte gebohrt sind, an der der Klotz 1 angelegt und befestigt wird. An den Platten-Anschlüssen 6 dichtet dabei jeweils ein O-Ring 7 zwischen den beiden aneinanderliegenden Teilen ab.

Der gezeichnete Platten-Anschluß 6 ist Pumpenanschluß P. Ein Verbraucheranschluß A und ein Rücklaufanschluß R sind nur angedeutet und durch Pfeile bezeichnet.

In der Ausnehmung 2 sitzen axial aneinanderstoßend drei Hülsen 8,9 und 10, die zusammen mit dem Klotz 1 das Ventilgehäuse des Ventils 4 bilden. Sie sind gehalten durch einen Absatz 11 des Klotzes 1 am einen Ende und eine die Ausnehmungen 2 und 3 verschließende Platte 12 am anderen Ende.

Die Hülsen 8 und 9 bieten einen zylindrischen Innenraum 13 für einen Ventil-Kolben 14. Auf einem mittleren Abschnitt des zylindrischen Innenraums 13 ist am Innenumfang der Hülsen 8 und 9, zusammen genommen, ein flacher Ringraum 15 ausgebildet. Er ist durch eine Reihe radialer Bohrungen 16 in der Hülse 8 und durch Zwischenräume zwischen Stegen 17 in der Hülse 9 verbunden mit einem in dem Klotz 1 ausgefrästen Ringraum 18, von dem eine in dem Klotz 1 gebohrte Verbraucherleitung 19 zu dem Verbraucheranschluß A führt.

In ähnlicher Weise ist am anderen Ende der Hülse 9 in dieser noch einmal ein Ringraum 20 ausgebildet und durch Zwischenräume zwischen Stegen 21 der Hülse 9 mit einem Ringraum 22 in dem Klotz 1 verbunden.

Zu beiden Seiten des Ringraumes 18 ist zwischen den Hülsen 8 und 9 und dem Klotz 1 durch einen Dichtring 23 bzw. 24 abgedichtet. Der Ringraum 22 ist dicht abgeschlossen durch den Dichtring 24 und einen Dichtring 25 an der Hülse 10, der im übrigen zusammen mit einem Dichtring 26 eine an der Außenwand der Hülse 10 eingeschnittene Nut 27 einschließt, in die aus der Hülse 10 herausführende radiale Bohrungen 28 münden.

In den Ventilkolben 14 führen von seiner dem Druckmittelanschluß P zugekehrten Stirnseite her achsparallele Bohrungen 29. Sie werden radial nach außen fortgesetzt durch einen vom Umfang her in den Kolben eingeschnittenen schmalen Spalt 30.

In der dargestellten Schließstellung des Ventils befindet sich der Spalt 30 vor einem in der Hülse 8 angeordneten Dichtring 31, der somit zwischen dem Pumpenanschluß P und dem nach dem Verbraucheranschluß A weiterverbundenen Ringraum 15 sperrt. In der Öffnungsstellung des Ventils ist der Ventil-Kolben 14 so weit verschoben, daß der Spalt 30 in den Ringraum 15 mündet und damit ein Durchgang freigegeben ist von dem Druckmittelanschluß P über die Bohrungen 29, den Spalt 30, den Ringraum 15, die Bohrungen 16, den Ringraum 18 und die Verbraucherleitung 19 nach dem Verbraucheranschluß A.

In dieser Öffnungsstellung des Ventils liegt ein am Ventilkolben 14 angebrachter Dichtring 32 an der zylindrischen Innenwand der Hülse 9 an. Er sperrt damit zwischen den Ringräumen 15 und 20, d.h. er trennt den Verbraucheranschluß A vom Rücklaufanschluß R.

In der gezeichneten Öffnungsstellung hingegen sind die Ringräume 15 und 20 durch eine Einschnürung 33 des Ventilkolbens 14 verbunden. Es besteht dann also Durchgang von dem Verbraucheranschluß A über die Verbraucherleitung 19, den Ringraum 18, die Bohrungen 16, den Ringraum 15, die Einschnürung 33, den Ringraum 20, die Zwischenräume zwischen den Stegen 21, den Ringraum 22, eine einseitige Erweiterung 34 des Ringraums 22 und Bohrungen 35 und 36 in dem Klotz zu dem Rücklaufanschluß R.

Hinter der Einschnürung 33 geht der Ventil-Kolben 14 in einen, im Durchmesser etwas größeren, Zylinderkolben 37 über, dessen zugehöriger Zylinder die am Ende durch eine Stirnwand 38 geschlossene Hülse 10 ist. Der Vollständigkeit halber sei der Dichtring 39 des Zylinder-Kolbens 37 erwähnt.

Der Druckraum 40 des Zylinders ist von dem Pumpenanschluß P her beaufschlagt über eine axiale Bohrung 41 des Ventilkolbens 14 und eine in diese eingeschraubte Drossel 42. Der Auslaß aus dem Druckraum 40 durch die Bohrungen 28 und die Nut 27 ist weitergeführt durch eine Bohrung 43 zu dem Steuerventil 5. Das Steuerventil 5 verbindet die Bohrungen 43 und 35 in seiner Öffnungsstellung und hält sie sonst getrennt.

Wie sich aus der vorstehenden Beschreibung ergibt, liegt in der Schließstellung des Ventils der Pumpendruck über die Bohrung 41 und die Drossel 42 in dem Druckraum 40 an. Die somit durch den Kolben 37 erzeugte Schließkraft wird ergänzt durch eine nicht gezeichnete, gegen den Kolben sowie gegen die Stirnwand 38 abgestützte Druckfeder. Infolge des größeren Durchmessers des Zylinder-Kolbens 37 gegenüber dem Ventil-Kolben 14 wie auch der erwähnten Feder ist die von vorne auf die Stirnseite des Ventil-Kolbens 14 in dem dortigen Druckraum 44 ausgeübte Kraft unterlegen.

Sie überwiegt aber und überwindet die erwähnte Federkraft und die hydraulische Restkraft in dem Druckraum 40, wenn dieser durch Betätigen des Steuerventils 5 zum Rücklaufanschluß R hin geöffnet wird; der freie Querschnitt der Drossel 42 ist im Vergleich zu den übrigen Durchflußquerschnitten entsprechend klein bemessen.

Schließt das Steuerventil 5 und fließt daher aus dem Druckraum 40 nichts mehr ab, baut sich durch die Drossel 42 hindurch wieder ein auf den Kolben 37 wirkender Druck auf, und der Ventilkolben 14 wird in die Schließstellung zurück verschoben.

Das Steuerventil 5 sei im folgenden nur gerafft beschrieben:

Sein Ventilgehäuse ist ergänzend zu der Ausnehmung 3 gleichfalls durch eine Hülse 45 gebildet sowie durch einen Deckel 46 und schließlich einen zwischen diesen beiden Teilen gehaltenen Ventilsitz 47. Von der Bohrung 43 her ist über einen Ringraum 48 und Bohrungen 49 ein Druckraum 50 mit der Hydraulikflüssigkeit beaufschlagt. Durch die Wahl des Durchmesserverhältnisses zwischen dem Dichtsitz eines Ventilkegels 51 und seinem Schaft 52 läßt sich eine gewünschte hydraulische Schließkraft des Steuerventils zusätzlich zu derjenigen einer Druckfeder 53 erzeugen.

In der Öffnungsstellung, in der der Ventilkegel 51 von dem Dichtsitz abgehoben ist, strömt die Hydraulikflüssigkeit durch oberhalb des Ventilkegels 51 befindliche Durchlässe 44 in eine axiale Bohrung 55, die durch den Ventilkegel 51 und ihren Schaft 52 hindurch bis zum Ende des Schaftes führt, und schließlich durch eine zentrale Bohrung 56 und zwischen Füßen 57 der Hülse 45 hindurch ab in die Bohrung 35.

Betätigt wird das Steuerventil 5 von einem Druckknopf 58 aus über eine Druckstange 59, einen an einer Welle 60 angeordneten Hebel 61 und einen von diesem aus auf die Oberseite des Ventilkegels 51 wirkenden Stößel 62.

Der Druckknopf 58 mit der Stoßstange 59 läßt sich auch durch eine magnetische Einrichtung ersetzen. Im Falle einer Störung der magnetischen Einrichtung ist das Betätigen des Steuerventils 5 durch Drehen an dem herausragenden Ende der Welle 60 möglich.

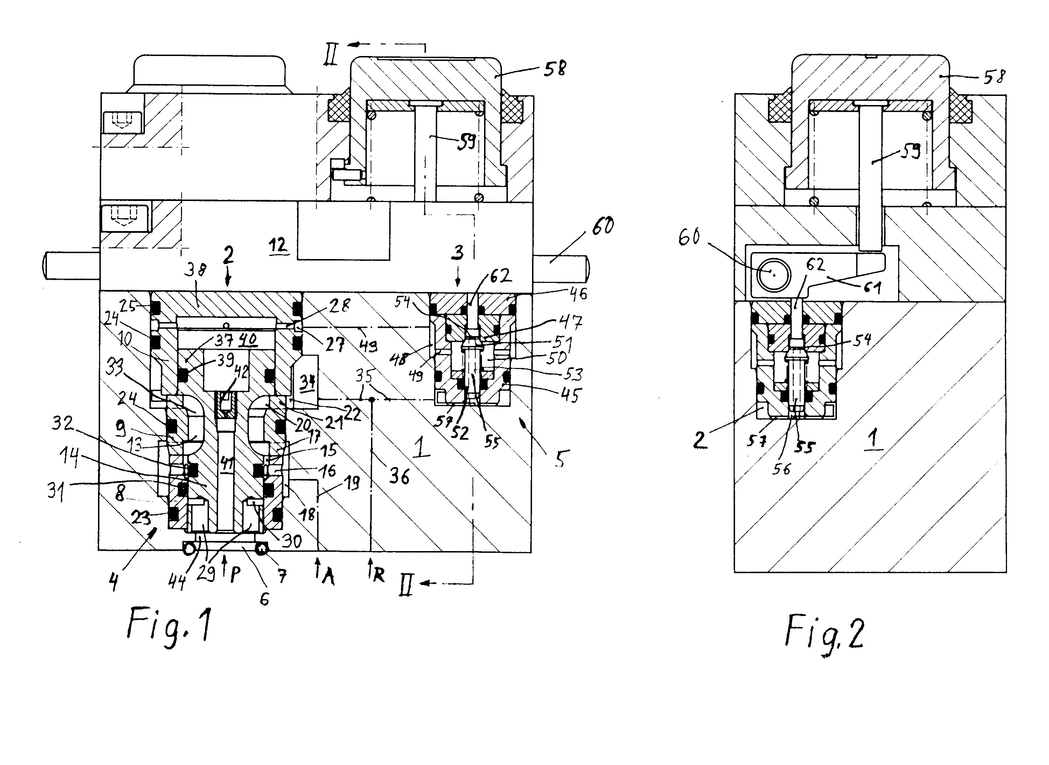

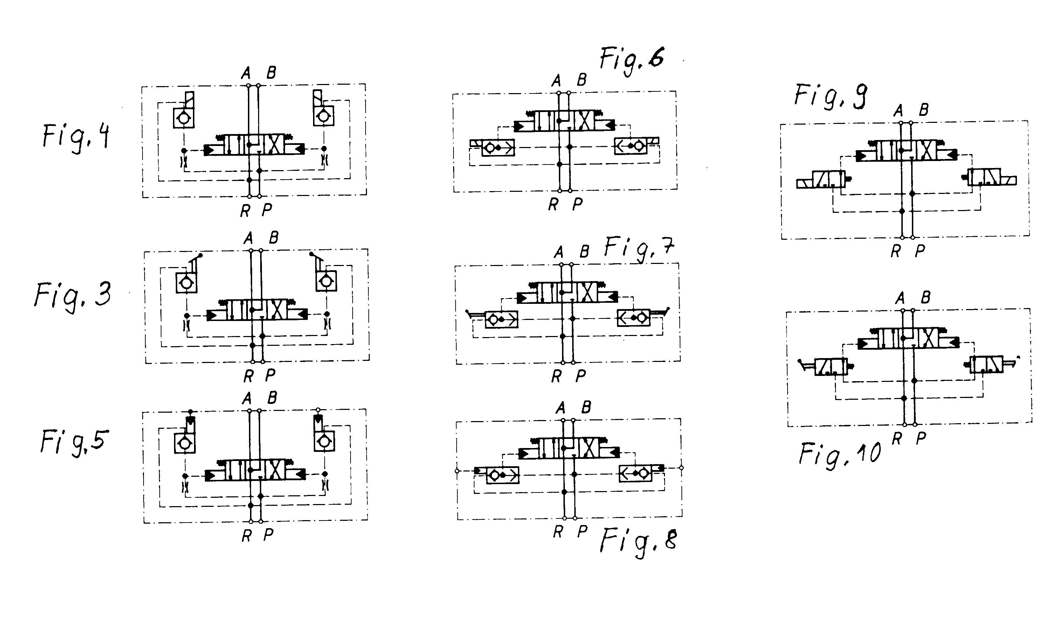

Das Schaltschema des Ventils nach Fig. 1 und 2 findet sich in Fig. 3. In Fig. 4 ist die Handbetätigung mittels des Druckknopfes 58 ersetzt durch die schon kurz erwähnte magnetische Steuereinrichtung, in Fig. 5 durch eine hydraulische Pilotsteuerung.
Fig. 6 bis 8 entsprechen Fig. 4 bis 5 mit dem Unterschied, daß das Prinzip des Rückschlagventils mit der Drossel ersetzt ist durch ein Wechselventil. In der Normalstellung oder Schließstellung liegt von links und rechts der gleiche hydraulische Druck an. Der Vorteil des Wechselventils besteht darin, den Verlust an Druckmedium in der Öffnungsstellung zu vermeiden.
Fig. 9 und 10 zeigen statt Rückschlagventilanordnung und Wechselventil ein Zweiwege-Schaltventil.

**Patentansprüche**

1. Hydraulisches Ventil (4) mit einem Ventilgehäuse (1,8-10) und einem Ventilkolben (14), der an einem Dichtsitz (31) einen Durchgang von einem Pumpenanschluß (P) zu einem Verbraucheranschluß (A) in Schließstellung sperrt und in Öffnungsstellung frei läßt und dessen an der einen Stirnseite vor dem Dichtsitz (31) in Öffnungsrichtung wirksamer Kolbenfläche an der anderen Stirnseite eine Schließkraft erzeugende Kolbenfläche (37) entgegengerichtet ist, deren Druckraum (40) mit dem Druckraum (44) vor der ersteren Kolbenfläche über eine Drossel (42) verbunden ist und zum Öffnen des Ventils (4) durch ein Steuerventil (5) zu öffnen ist,
dadurch gekennzeichnet,
daß das Steuerventil (5) in einer mit einem Rücklaufanschluß (R) verbindenden Leitung (43,35,36) angeordnet ist.

2. Ventil nach Anspruch 1,
dadurch gekennzeichnet,
daß der Ventilkolben (14) an einem weiteren Dichtsitz (9) einen Durchgang von dem Verbraucheranschluß (A) zu dem Rücklaufanschluß (R) in der genannten Schließstellung frei läßt und in der genannten Öffnungsstellung sperrt.

3. Ventil nach Anspruch 1 oder 2,

dadurch gekennzeichnet,
daß es ein Schieberventil ist und der erstgenannte Dichtsitz (31) einen in einer Nut des Gehäuses (1,8-10) angeordneten, in der Schließstellung den Kolben (14) auf einem zylindrischen Abschnitt dicht umschließenden Dichtring (31) aufweist und der Kolben (14) einen an seinem Umfang umlaufenden Spalt (30) aufweist, der durch Längsbohrungen (29) nach der erstgenannten Stirnseite des Kolbens (14) verbunden ist und in der Schließstellung vor und in der Öffnungsstellung hinter dem Dichtring (31) liegt, wo er nach einem Ringraum (15) des Ventilgehäuses (1,8-10) ausmündet, der mit dem Verbraucheranschluß (A) verbunden ist.

4. Ventil nach den Ansprüchen 2 und 3,
dadurch gekennzeichnet,
daß der genannte weitere Dichtsitz einen hinter dem genannten Ringraum (15) angeordneten zylindrischen Abschnitt (9) der Ventilgehäusewand (8-10) aufweist, an dem in der genannten Öffnungsstellung ein in einer Nut des Kolbens (14) angeordneter Dichtring (32) dicht anliegt und an dem in der genannten Schließstellung eine Einschnürung (33) des Kolbens (14) von dem genannten Ringraum (15) aus vorbeiführt nach einem weiteren Ringraum (20) des Ventilgehäuses (1,8-10) der mit dem Rücklaufanschluß (R) verbunden ist.

5. Ventil nach Anspruch 3 oder 4,
dadurch gekennzeichnet,
daß das Ventilgehäuse (1,8-10) aus einem Klotz (1) und in einer gebohrten und/oder gefrästen Ausnehmung (2) des Klotzes (1) angeordneten Hülsen (8-10) besteht, in denen der Dichtring (31) des erstgenannten Dichtsitzes, der zylindrische Gehäusewand-Abschnitt (9) des weiteren Dichtsitzes und eine Zylinderwand (10) zur Bildung des erstgenannten Druckraumes (40) angeordnet sind, in welcher das die genannte andere Stirnseite aufweisende Ende des Kolbens (14) als Zylinderkolben (37) dicht (39) geführt ist.

6. Ventil nach Anspruch 5,
dadurch gekennzeichnet,
daß die genannten Ringräume (15;20) am Innenumfang der Hülsen (8;9) ausgebildet sind und/oder unter Verbindung durch Durchlässe (16,17;21) in der Hülsenwand (8;9) am Außenumfang der Hülsen (8;9) und/oder an der Wand (18;22) der Ausnehmung (2) des Klotzes (1) ausgebildet sind.

7. Ventil nach Anspruch 5 oder 6,

dadurch gekennzeichnet,
daß die genannte mit dem Rücklaufanschluß (R) verbindende Leitung (43,35,36) in dem Klotz (1) gebohrt ist und das Steuerventil (5) in einer Bohrung und/oder Ausfräsung (3) des Klotzes (1), vorzugsweise gleichfalls mit mindestens einer Hülse (45) als Teil seines Ventilgehäuses (1,45-47), angeordnet ist.

8. Ventil nach Anspruch 7,
dadurch gekennzeichnet,
daß aus dem erstegenannten Druckraum (40) ein erster Leitungsabschnitt (43) in einen Druckraum (50) des Steuerventils (5) führt, in dem ein durch einen Stößel (62) zu betätigender Kegelventilkörper (51,52) eine den Ventilkegel (51) auf einen Dichtsitz (47) drückende Kolbenfläche aufweist.

9. Ventil nach Anspruch 8,
dadurch gekennzeichnet,
daß als Auslaß in dem Kegelventilkörper (51,52) eine axiale Bohrung (55) angeordnet ist.

10. Ventil nach Anspruch 8 oder 9,
dadurch gekennzeichnet,
daß ein zweiter Leitungsabschnitt (35) den Auslaß des Steuerventils (5) mit dem genannten weiteren Ringraum (20,22) des Ventils (4) verbindet und von dem zweiten Leitungsabschnitt (35) ein dritter Leitungsabschnitt (36) zu dem Rücklaufanschluß (R) führt.

Fig.2

Fig.1

6

Fig. 9

Fig. 10

Fig. 6

Fig. 7

Fig. 8

Fig. 4

Fig. 3

Fig. 5

| Kategorie | **EINSCHLÄGIGE DOKUMENTE** | | EP 91114614.0 |
|---|---|---|---|

| Kategorie | Kennzeichnung des Dokuments mit Angabe, soweit erforderlich. der maßgeblichen Teile | Betrifft Anspruch | KLASSIFIKATION DER ANMELDUNG (Int. Cl.⁵) |
|---|---|---|---|
| X | DE - A1 - 3 537 760 (KAWASAKI)  <br> * Fig. 1 * | 1 | F 15 B 13/01 <br> F 15 B 13/02 |
| A | | 3,5,8, 9 | |
| D,A | EP - A1 - 0 241 880 (DEERE)  <br> * Gesamt * | 1 | |
| A | DE - A1 - 3 323 363 (MANNESMANN) | | |

| RECHERCHIERTE SACHGEBIETE (Int. Cl.⁵) |
|---|
| F 15 B 13/00 <br> F 16 K 31/00 |

Der vorliegende Recherchenbericht wurde für alle Patentansprüche erstellt.

| Recherchenort | Abschlußdatum der Recherche | Prüfer |
|---|---|---|
| WIEN | 20-11-1991 | BAUMANN |